(19) Europäisches Patentamt / European Patent Office / Office européen des brevets

(11) **EP 1 806 603 A1**

(12) **EUROPEAN PATENT APPLICATION**
published in accordance with Art. 158(3) EPC

(43) Date of publication:
**11.07.2007 Bulletin 2007/28**

(21) Application number: **05793488.7**

(22) Date of filing: **17.10.2005**

(51) Int Cl.:
***G02B 5/02*** (2006.01)   ***G02B 1/04*** (2006.01)

(86) International application number:
**PCT/JP2005/019038**

(87) International publication number:
**WO 2006/043508 (27.04.2006 Gazette 2006/17)**

(84) Designated Contracting States:
**DE FR GB**

(30) Priority: **20.10.2004 JP 2004305232**

(71) Applicant: **TOMOEGAWA PAPER CO. LTD.**
**Chuo-ku,**
**Tokyo 104-8335 (JP)**

(72) Inventors:
• **MURATA, M.,**
**Tomoegawa Co., Ltd.**
**Shizuoka-shi,**
**Shizuoka 4210192 (JP)**

• **HIGASHI, K.,**
**Tomoegawa Co., Ltd.**
**Shizuoka-shi,**
**Shizuoka 4210192 (JP)**

(74) Representative: **Nöth, Heinz et al**
**P.O. Box 31 02 60**
**80102 Munich (DE)**

(54) **ANISOTROPIC DIFFUSION MEDIUM**

(57)   An anisotropic diffusing medium in which an amount of transmitted light varies greatly depending on incident angle is provided. An anisotropic diffusing medium of the present invention includes a resin layer of cured material including at least a fluorine-containing photocurable compound and a fluorine-free photocurable compound, and an amount of linear transmitted light when light is transmitted to the resin layer differs depending on incident angle of incident light on the resin layer.

Fig. 1

**Description**

Technical Field

The present invention relates to an anisotropic diffusing medium in which an amount of transmitted light varies greatly depending on the incident angle.

Background Art

Members exhibiting light diffusion have been conventionally used as lighting devices or as building materials, and in recent displays, in particular, such members are widely used in LCDs. As mechanisms for producing light diffusion in these members, there are: scattering by convex and concave parts formed on a surface (surface scattering), scattering by difference of refractive indexes of a matrix resin and a filler dispersed therein (internal scattering), and scattering by both surface scattering and the internal scattering. Generally, diffusion performance of these light-diffusing members is isotropic; therefore, the diffusion characteristics of the transmitted light do not change greatly even if the incident angle is changed to some extent.

However, a light controlling plate that can selectively scatter a particular incident light is suggested in Japanese Publication No. 1. This light controlling plate, which is a special light diffusing member, is a plastic sheet, in which a resin composition including plural compounds having at least one photopolymerizing carbon-carbon double bond in molecules thereof, and having a different refractive index, respectively, is cured by irradiation of ultraviolet light from a certain direction. The sheet selectively scatters only incident light having a certain angle relative to the sheet.

As a material to produce the light controlling plate, in addition to the above-mentioned "resin composition including plural compounds having at least one photopolymerizing carbon-carbon double bond in molecules thereof, and having a different refractive index, respectively", a composition including urethane acrylate oligomer is disclosed in Japanese Publications Nos. 2 to 4. In addition, a combination of compound A having a polymerizing carbon-carbon double bond in molecules thereof and compound B not having a polymerizing carbon-carbon double bond and having a difference of refractive index of not less than 0.01 compared to the compound A, may be mentioned, and a compound having plural polymerizing carbon-carbon double bonds in molecules thereof, and having a difference in refractive index before and after curing of not less than 0.01, is described in Japanese Publication No. 5. Furthermore, a combination of a radical polymerizing compound and a cationic polymerizing compound having vinyl ether in its functional group is disclosed in Japanese Publication No. 6.

The incident angle dependence characteristics of scattering characteristics, in which incident light from a certain angle is selectively scattered, is observed in the case in which the light controlling plate is rotated around a line at which a linear light source arranged above the light controlling plate during the production process of the light controlling plate is projected onto the surface of the light controlling plate, as illustrated in Japanese Publication No. 2. That is, in the case in which the light controlling plate is rotated around a line perpendicular to the projected line of the linear light source, the incident angle dependence characteristics of the scattering characteristics are only slightly observed, or incident angle dependence characteristics of the scattering characteristics that are very different from the former case are observed.

An optical film, a so-called "light-control film", or a "louver film", which permits transmitting of incident light from a certain range of angles and blocks the light from outside this range, is known. It has been conventionally used as a backlight of an instrument panel, and it is recently being used as a viewing angle control for displays, that is, to prevent unauthorized viewing. According to Japanese Publications Nos. 7 and 8, this film can be obtained by multiply layering a transparent plastic layer and a colored plastic layer alternately to form a block, and shaving the block perpendicularly or at a certain angle to the plastic layer. This louver film has a structure in which the colored louvers are equally spaced at a certain inclination to the thickness direction of the film, and therefore, light collimated in the direction of the louver is transmitted, whereas light that passes through plural neighboring louvers is absorbed at the louvers, and the light cannot be transmitted.

Japanese Publication No. 1 is Japanese Unexamined Patent Application Publication No. Hei01(1989)-77001. Japanese Publication No. 2 is Japanese Unexamined Patent Application Publication No. Hei01(1989)-147405. Japanese Publication No. 3 is Japanese Unexamined Patent Application Publication No. Hei01(1989)-147406. Japanese Publication No. 4 is Japanese Unexamined Patent Application Publication No. Hei02(1990)-54201. Japanese Publication No. 5 is Japanese Unexamined Patent Application Publication No. Hei03(1991)-109501. Japanese Publication No. 6 is Japanese Unexamined Patent Application Publication No. Hei06(1994)-9714. Japanese Publication No. 7 is Japanese Unexamined Patent Application Publication No. Sho50(1975)-92751. Japanese Publication No. 8 is Japanese Patent Publication No. 3043069.

DISCLOSURE OF THE INVENTION

Among problems in the anisotropic diffusing medium as described above, low anisotropic diffusion characteristics can be mentioned. In particular, in the case in which the anisotropic diffusing medium is used in a display such as an LCD, etc., in which the space between the anisotropic diffusing medium and a light source is very narrow, such as a few nanometers or less, anisotropic diffusion characteristics are poor, and it is difficult to produce the effects of an anisotropic diffusing medium. Thus, the anisotropic diffusing medium is used as a light control board only in a building material application in which space between the anisotropic diffusing medium and a light source can be widened. In the present invention, the intensity of the anisotropic diffusion characteristics is evaluated by the change in the ratio of the amount of linear transmitted light, as described below.

In the above louver film, anisotropic diffusion characteristics are strong; however, some light is blocked and is not diffused, and the amount of linear transmitted light is decreased at all incident angles by providing the louver. Therefore, this technique cannot be said to provide an anisotropic diffusion medium.

An object of the present invention is to improve an anisotropic diffusing medium based on the above-mentioned conventional techniques, and to provide an anisotropic diffusing medium having large change ratio of linear transmitted light due to incident angle of incident light, that is, an anisotropic diffusing medium having high anisotropic diffusion characteristic.

An anisotropic diffusing medium of the present invention includes a resin layer of cured material of a composition including at least a fluorine-containing photocurable compound and a fluorine-free photocurable compound, the amount of linear transmitted light, when light is transmitted to the resin layer, differs depending on the incident angle of incident light to the resin layer.

According to the anisotropic diffusing medium of the present invention, areas having different refractive indexes are formed by using a photocurable compound which contains fluorine (hereinafter referred to as a fluorine-containing photocurable compound) and a photocurable compound which does not contain fluorine (hereinafter referred to as a fluorine-free photocurable compound), an anisotropic diffusing medium having a large change in the ratio of linear transmitted light due to the incident angle of incident light, that is, an anisotropic diffusing medium having high anisotropic diffusion characteristics can be obtained. In the present invention, since the fluorine-containing photocurable compound is used as a water-repellant or oil-repellent agent, or as a stain proofing agent, and has low affinity for other compounds, it is believed that areas having different refractive indexes are easily formed by separating to the fluorine-free compound in curing, and anisotropic diffusion characteristics are increased.

BRIEF DESCRIPTION OF THE DRAWINGS

Fig. 1 is a diagram showing an embodiment of the anisotropic diffusing medium of the present invention.
Fig. 2A is an electron micrograph showing a cross section divided by line A-A of the light diffusing medium of the present invention of Fig. 1. Fig. 2B is an electron micrograph showing a cross section divided by line B-B (a cross section perpendicular to the cross section divided by line A-A) of the light diffusing medium of the present invention of Fig. 1.
Fig. 3 is a diagram showing an embodiment of the anisotropic diffusing medium of the present invention.
Fig. 4A is an electron micrograph showing a cross section divided by line A-A (a cross section perpendicular to a direction of the linear light source) of the conventional light diffusing medium of Fig. 3. Fig. 4B is an electron micrograph showing a cross section divided by line B-B (a cross section collimated in a direction of the linear light source) of the light diffusing medium of Fig. 3.
Fig. 5 is a diagram showing an evaluating method of the incident angle dependence characteristics of the amount of the linear transmitted light of the anisotropic diffusing medium of the present invention (rotated around only line L).
Fig. 6 is a graph showing the relationship of incident angle and amount of linear transmitted light in the evaluation of the incident angle dependence characteristics of the amount of linear transmitted light of the anisotropic diffusing medium.
Fig. 7 is a cross section explaining the incident angle dependence characteristics of the amount of linear transmitted light being transmitted through the anisotropic diffusing medium of Fig. 1.
Fig. 8 is a diagram showing the incident angle dependence characteristics of the amount of linear transmitted light being transmitted through the anisotropic diffusing medium of the present invention.
Fig. 9 is a diagram showing another embodiment of the anisotropic diffusing medium of the present invention.
Fig. 10 is a cross section explaining the incident angle dependence characteristics of the amount of linear transmitted light being transmitted through the anisotropic diffusing medium of Fig. 9.
Fig. 11 is a diagram showing the evaluating method of the incident angle dependence characteristics of the amount of linear transmitted light of the anisotropic diffusing medium of the present invention (rotated around lines L and M).
Fig. 12 is a graph showing the relationship of the incident angle and the amount of linear transmitted light in the evaluation of the incident angle dependence characteristics of the amount of linear transmitted light in a conventional light-diffusing medium.

Fig. 13 is a graph showing incident angle dependence characteristics of the amount of linear transmitted light of Example 1.

Fig. 14 is a graph showing incident angle dependence characteristics of the amount of linear transmitted light of Example 2.

Fig. 15 is a graph showing incident angle dependence characteristics of the amount of linear transmitted light of Example 3.

Fig. 16 is a graph showing incident angle dependence characteristics of the amount of linear transmitted light of Example 4.

Fig. 17 is a graph showing incident angle dependence characteristics of the amount of linear transmitted light of a Comparative Example.

BEST MODE FOR CARRYING OUT THE INVENTION

In following, the anisotropic diffusing medium of the present invention. will be explained in detail.

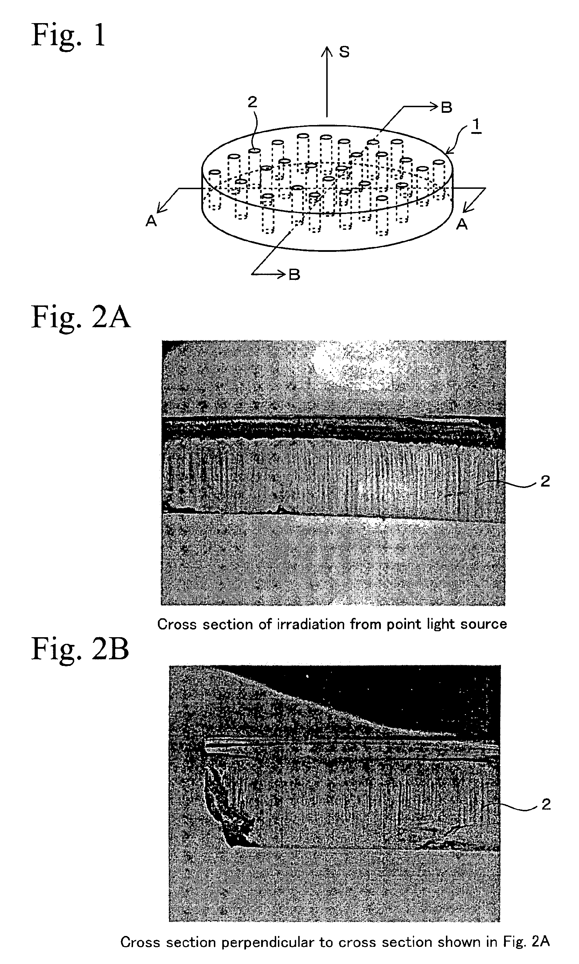

An embodiment of the anisotropic diffusing medium of the present invention can be explained by Fig. 1. That is, inside of the sheet shaped anisotropic diffusing medium 1 comprising cured material of a composition including a fluorine-containing photocurable compound and a fluorine-free photocurable compound, there are numerous fine areas 2. These fine areas 2 are formed by irradiating mutually collimated ultraviolet light beams from a point light source arranged in the direction of normal line S of the anisotropic diffusing medium 1, and all of these fine areas extend parallel to a direction of the normal line S. In Fig. 1, the fine areas 2 are described schematically to be in a pillar shape; however, the shape thereof may be a circular shape, a polygonal shape, an indeterminate shape, or the like, and it is not limited to a specific shape.

Fig. 2A is an electron micrograph showing a cross section divided by line A-A shown in Fig. 1, and Fig. 2B is an electron micrograph showing a cross section divided by line B-B shown in Fig. 1. In both cross sections, it is confirmed that the fine areas 2 exist. In the anisotropic diffusing medium shown in Fig. 1, since the fine areas 2 exists in any cross section as described above, light diffusion characteristics (incident angle dependence characteristics of diffusion characteristics) can be exhibited to even incident light from any angle.

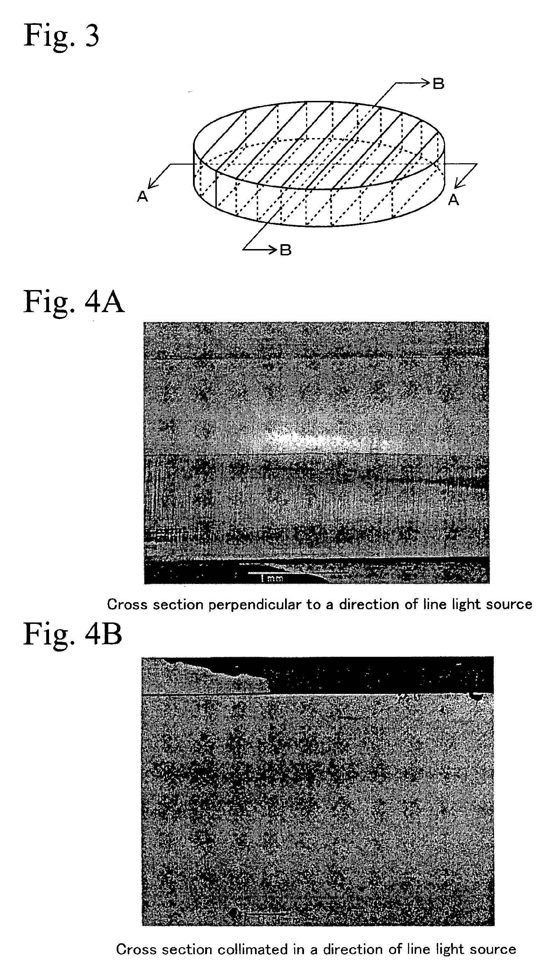

Furthermore, in the case in which a linear light source is used as an irradiating light source, a cured area is formed in a plate shape which is parallel to a direction of the linear light source as shown Fig. 3, and the incident angle dependence characteristics of the diffusion characteristics can be confirmed in the A-A line cross section shown in Fig. 3.

That is, Fig. 3 shows an embodiment of the present invention, and inside of the sheet shaped anisotropic diffusing medium including a fluorine-containing photocurable compound and a fluorine-free photocurable compound, plate-shaped areas having different refractive indexes are formed so as to be parallel each other. Fig. 4A is an electron micrograph showing a cross section divided by line A-A shown in Fig. 3, and Fig. 4B is an electron micrograph showing a cross section divided by line B-B shown in Fig. 3. In the case in which it is observed from the cross section divided by line A-A as shown in Fig. 4A, the anisotropic diffusing medium does not have areas with different refractive indexes and is homogeneous. In the anisotropic diffusing medium having such a structure, light diffusion characteristics can be exhibited in the case in which the incident light is collimated in the A-A line cross section; however, light diffusion characteristics can be insufficiently exhibited in the case in which the incident light is collimated in the B-B line cross section.

In this embodiment, the shape of the cured area is also not limited, and it is preferable that the cured area be a pillar shape (or a circular shape, polygonal shape, an indeterminate shape, or the like) in which all anisotropic diffusion characteristics can be exhibited in all 360 degrees, since a display may be viewed from all angles.

Furthermore, in the fluorine-containing photocurable compound, it is preferable that the ratio of fluorine atoms in the molecular weight be 40% or more, and it is more preferable that it be 50% or more. In the case in which the ratio of fluorine atoms is low, cured areas are indistinct, and anisotropic diffusion characteristics are decreased.

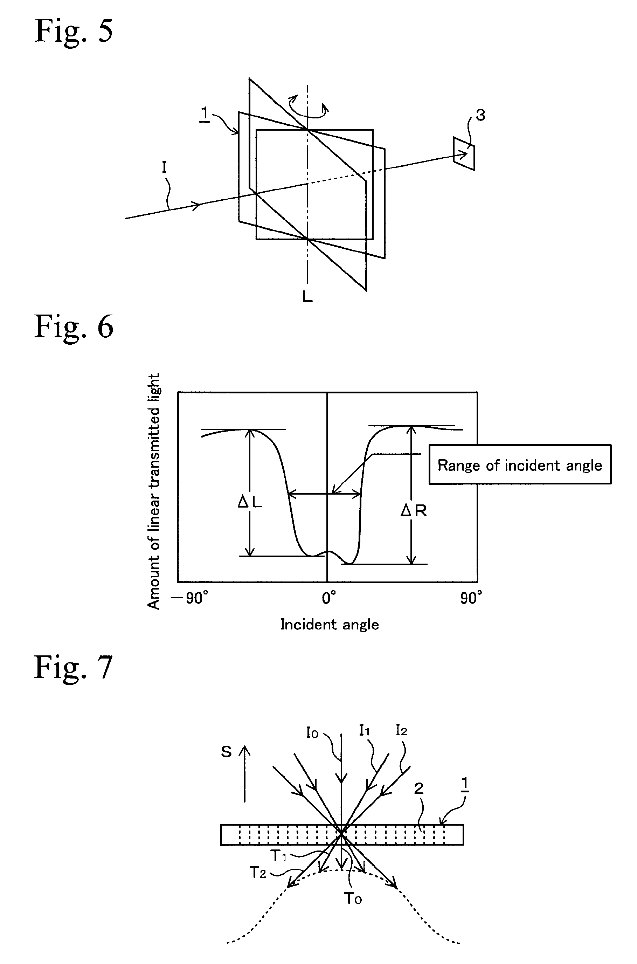

In the anisotropic diffusing medium of the present invention, the amount of linear transmitted light is different depending on the incident angle of the incident light. Generally, the scattering characteristics are expressed by a diffusing transmitting ratio, transmitting ratio of collimated light, or Haze value as in JIS-K7105 or JIS-K7136. These values are measured by adhering a sample to an integrating sphere and irradiating light from the direction of the normal line under conditions preventing light leakage; however, it is not assumed that measurements are taken while freely changing the incident angle. That is, there is no publicly known method to evaluate the incident angle dependence characteristics of scattering characteristics in an anisotropic diffusing medium. Therefore, in the present invention, as shown in Fig. 5, evaluation of the incident angle dependence characteristics of the amount of linear transmitted light is performed by arranging a sample between a light source (not shown in the figure) and a light receiving device 3, and by measuring the amount of light which is transmitted straight through the sample and enters into the light receiving device 3 while changing the angle of the sample by rotating around line L on the surface of the sample. As a specific device that may be used, a commercially available hazemeter, bending photometer, and spectrophotometer in which a rotatable sample holder is arranged between the light source and the light receiving part, may be mentioned. Although the value of the light amounts obtained by these measuring devices are relative values, the measured results shown in Fig. 6 were obtained as the incident angle dependence characteristics of the amount of linear transmitted light.

This result does not directly show scattering characteristics. However, it can give general diffusion characteristics since the amount of diffusing transmitted light is increased by decreasing the amount of linear transmitted light. Then, the ratio between maximum value and minimum value of the obtained amount of linear transmitted light is defined as change ratio of the amount of linear transmitted light, and the intensity of anisotropic diffusion characteristics is evaluated.

Expression 1

$$\text{Change ratio} = \frac{\text{Maximum value of amount of linear transmitted light} - \text{Minimum value of amount of linear transmitted light}}{\text{Maximum value of amount of linear transmitted light}}$$

In following, angle dependence characteristics of scattering characteristics will be explained by the amount of linear transmitted light and change ratio thereof.

Fig. 7 is a cross section explaining the incident angle dependence characteristics of the amount of linear transmitted light that is transmitted through the anisotropic diffusing medium shown in Fig. 1, using the amount of linear transmitted light measured by the above method. In Fig. 7, reference numeral 2 indicates the pillar-shaped cured area conceptually; the pillar-shaped cured area is extending in a direction of normal line S in this case. In the case in which light enters from the upper surface of the anisotropic diffusing medium and exits from the lower surface, the incident light $I_0$ which enters from a direction of normal line S, that is, the direction of extending of the pillar-shaped cured area, is strongly diffused when the light is passing through the anisotropic diffusing medium, and therefore, the amount of the corresponding linear transmitted light is small. In Fig. 7, this amount is expressed by a transmitted light vector $T_0$ having a size proportional to the amount of linear transmitted light and having the same direction as $I_0$. Next, in the case of incident light $I_1$ inclined to the incident light $I_0$ at some angle, since the amount of linear transmitted light corresponding to the light $I_1$ is increased, the transmitted light vector $T_1$ is larger than $T_0$. Furthermore, in the case of incident light $I_2$ further inclined to the incident light $I_1$, the corresponding transmitted light vector $T_2$ is further larger than $T_1$.

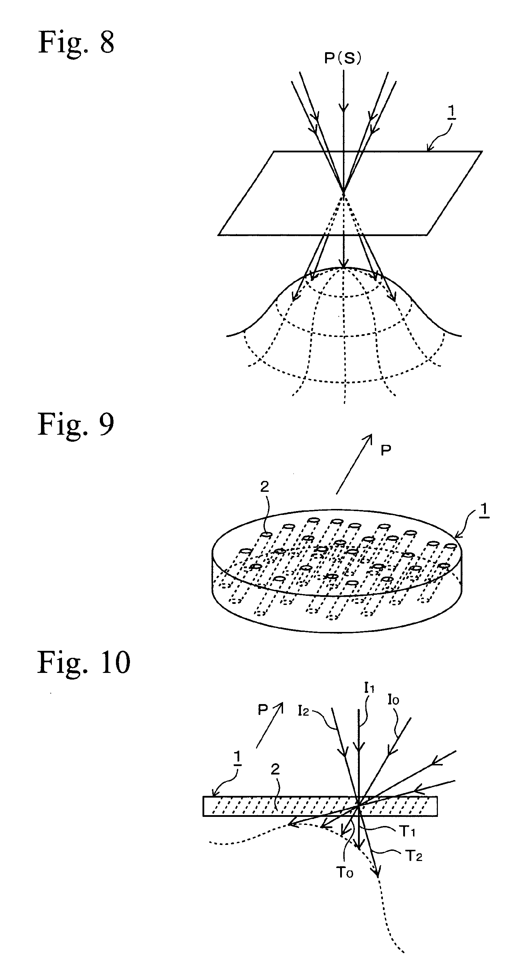

The amount of corresponding transmitted light of all the incident light inclined to the incident light $I_0$ is expressed by a vector in a similar manner as explained above, and connecting the top of all the vectors, a curved line expressed by a dotted line having symmetry shown in Fig. 7 is obtained. Furthermore, in the case in which other cross sections including incident light $I_0$ are investigated in a similar manner, a dotted curved line as shown in Fig. 7 is obtained in every cross section. That is, if the tops of the transmitted light vectors of all the directions are connected, a bell-shaped curved surface having an axial direction of a normal line S shown in Fig. 8 can be obtained.

The anisotropic diffusing medium of the present invention is not limited only to the above-mentioned embodiments, and for example, an anisotropic diffusing medium having incident angle dependence characteristics having a symmetric axis of direction P inclined from the direction of the normal line S at an arbitrary angle as shown in Fig. 9 is possible.

Fig. 10 is a cross section explaining the incident angle dependence characteristics of the amount of linear transmitted light that is transmitted through the anisotropic diffusing medium shown in Fig. 9. In Fig. 10, reference numeral 2 indicates the pillar-shaped cured area schematically. A similar investigation was performed regarding this anisotropic diffusing medium. By connecting the tops of transmitted light vectors $T_0$, $T_1$ and $T_2$ corresponding to incident light $I_0$ from the direction P which is a direction of extending of the pillar-shaped cured area, incident light $I_1$ and $I_2$ inclined to the incident light $I_0$, a dotted curved line shown in Fig. 10 is obtained. Furthermore, by connecting the tops of transmitted vectors in all the cross sections including the incident light $I_0$, a bell-shaped curved surface having an axial direction P shown in Fig. 8 can be obtained.

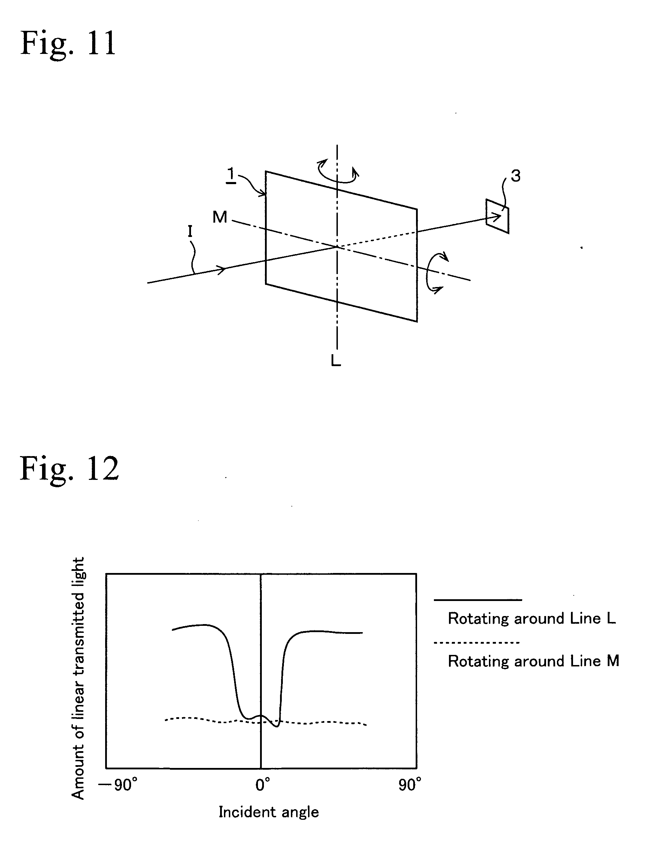

The light controlling plate produced by using a linear light source can also exhibit similar incident angle dependence characteristics shown in Fig. 6; however, this is only in the case in which a sample is rotated around a specific line L shown in Fig. 5. If the sample is rotated around a line perpendicular to the line L in the surface of the sample, the incident angle dependence characteristics of the amount of linear transmitted light are only slightly exhibited, or completely different phenomena are observed. That is, a solid line in Fig. 11 shows the angle dependence characteristics of the amount of linear transmitted light in the case in which a light controlling plate produced by performing light irradiation from a linear light source having the same direction of line L shown in Fig. 12 is rotated around the line L. In the case in which the sample is rotated around the line M perpendicular, to the line L, completely different incident angle dependence characteristics are exhibited as shown by the dotted line.

In the present invention, it is explained that the shape of the incident angle dependence characteristics of the amount of linear transmitted light has symmetry around a specific direction P, the symmetry mentioned here means that $\Delta R$ (a difference of maximum and minimum values of the amount of linear transmitted light in a positive area of incident light) and $\Delta L$ (a difference of maximum and minimum values of the amount of linear transmitted light in a negative area of incident light) satisfy the following relationship $0.5 \le (\Delta L / \Delta L) \le 2$, when an incident angle of the incident light directed in the direction P is set to 0 degrees as in Fig. 6.

The anisotropic diffusing medium of the present invention is produced by irradiating collimated beams of light from the direction of line P to the composition containing a photocurable compound so as to harden the composition. As a direction of the line P, it is necessary that the inclination from the normal line of the medium be not more than 45 degrees, desirably not more than 30 degrees, and more desirably not more than 15 degrees. Furthermore, it is desirable in an embodiment of the invention that the line P be the normal line. In the case in which light is irradiated from an angle not less than 45 degrees, absorption efficiency of the irradiated light is deteriorated, and this is disadvantageous from the viewpoint of production, and furthermore, it is undesirable since coincidence of the incident angle dependence characteristics of the amount of linear transmitted light within an arbitrary incident plane including the line P described in the present invention cannot be maintained. As is clear from Fig. 10, in the case in which the inclination of the direction P to the normal line is large, even if two incident light beams $I_2$ which are both inclined to the direction P at the same angle enters into the anisotropic diffusing medium, the length of their light paths in the anisotropic diffusing medium differ greatly from each other, and as a result, the light amount corresponding to each transmitted light beam $T_2$ becomes different.

As an embodiment of the anisotropic diffusing medium of the present invention, a single use of the anisotropic diffusing layer, a structure in which the anisotropic diffusing layer layered on a transparent substrate, and a structure in which transparent substrates are layered on both sides of the anisotropic diffusing layer, can be provided. As the transparent substrate, it is desirable that the transparency be high, desirably a full-spectrum transmission (JIS K7361-1) of not less than 80%, more desirably not less than 85%, and most desirably not less than 90%; and furthermore, desirably, a Haze value (JIS K7136) of not more than 3.0, more desirably not more than 1.0, and most desirably not more than 0.5. A transparent plastic film, glass plate or the like can be used, and in particular, the plastic film is desirable from the viewpoints of thinness, portability, shatterproof characteristics, and productivity. Specifically, polyethylene terephthalate (PET), polyethylene naphthalate (PEN), triacetylcellulose (TAC), polycarbonate (PC), polyarylate, polyimide (PI), aromatic polyamide, polysulfone (PS), polyethersulfone (PES), cellophane, polyethylene (PE), polypropylene (PP), polyvinylalcohol. (PVA), cycloolefin resin or the like can be mentioned, and these may be used alone or in combination, or be layered. The thickness of the substrate is in a range from 1 $\mu$m to 5 mm from the viewpoints of purpose and productivity, desirably 10 to 500 $\mu$m, and more desirably 50 to 150 $\mu$m.

Next, the anisotropic diffusing medium of the present invention is produced by curing the composition which contains a fluorine-containing photocurable compound and a fluorine-free photocurable compound, and in the anisotropic diffusing medium, a fine structure on the order of microns having a different refractive index is formed by irradiating light. As a result, specific anisotropic diffusion characteristics can be exhibited in the present invention. Therefore, it is preferable that the fluorine-containing photocurable compound and the fluorine-free photocurable compound occur in separate phases, so as to form fine structures during curing.

In addition, it is preferable that the fluorine-containing photocurable compound and the fluorine-free photocurable compound have high compatibility in a non-cured state, and it is more preferable that they be dissolved into each other at a desired ratio. The higher the compatibility thereof, the finer the fine structures formed in photocuring. Consequently, each area formed by curing will be clearly separated, and anisotropic diffusion characteristics will be increased.

The fluorine-containing photocurable compound includes compounds selected from polymers, oligomers, and monomers with a functional group having radical polymerizing characteristics or cationic polymerizing characteristics and having a fluorine atom in a chemical structure.

As a radical polymerizing fluorine-containing photocurable compound, specifically, acrylate monomers such as 2,2,2-trifluoro ethylacrylate, 2,2,3,3,3-pentafluoro propylacrylate, 2-(perfluoro ethyl)-ethylacrylate, 2-(perfluoro butyl)-ethylacrylate, 2-(perfluoro octyl)-ethylacrylate, 3-perfluoro butyl-2-hydroxypropylacrylate, 3-perfluoro hexyl-2-hydroxypropylacrylate, 2-(perfluoro-5-methylhexyl)ethylacrylate, 2-(perfluoro-7-methyloctyl)ethylacrylate, 1H,1H,4H,4H-perfluoro-1,4-butanediol diacrylate, 1H,1H,6H,6H-perfluoro-1,6-hexanediol diacrylate, 1H,1H,8H,8H-perfluoro-1,8-octanediol diacrylate, bisphenol AF diethyldiacrylate, tetrafluoro-1,4-hydroxyquinone diglycol diacrylate, or the like, can be used; however, they are not limited to the above compounds. These compounds can be used alone or in combination. It should be noted that methacrylates can also be used; however, acrylates are more desirable than methacrylates since the photopolymerization ratios of acrylates are faster.

As a cationic polymerizing fluorine-containing photocurable compound, specifically, compounds such as 3-heptafluoro butyl-1,2-epoxyethane, 3-perfluoro butyl-1,2-epoxypropane, 3-perfluoro hexyl-1,2-epoxypropane, 3-perfluoro decyl-1,2-epoxypropane, 3-(perfluoro-3-methylbutyl)-1,2-epoxypropane, 3-(perfluoro-5-methylhexyl)-1,2-epoxypropane, 3-(perfluoro-7-methyloctyl)-1,2-epoxypropane, 3-(2,2,3,3-tetrafluoro propoxy)-1,2-epoxypropane, 3-(1H,1H, 5H-octafluoro pentyloxy)-1,2-epoxypropane, 3-[2-(perfluoro hexyl)ethoxy]-1,2-epoxypropane, perfluoro(2-n-butyl tetrahydrofuran), or the like, can be used; however, they are not limited to the above compounds.

The fluorine-free photocurable compound includes compounds selected from polymers, oligomers, and monomers having a functional group with radical polymerizing characteristics or cationic polymerizing characteristics and without a fluorine atom in a chemical structure.

As a radical polymerizing photocurable compound, specifically, an acrylic oligomer such as the so-called epoxy acrylate, urethane acrylate, polyester acrylate, polyether acrylate, polybutadiene acrylate, silicone acrylate or the like, and an acrylate monomer such as 2-ethylhexylacrylate, iso-amyl acrylate, butoxyethyl acrylate, ethoxydiethylene glycol acrylate, phenoxyethyl acrylate, tetrahydrofurfuryl acrylate, iso-norbornyl acrylate, 2-hydroxyethyl acrylate, 2-hydroxypropyl acrylate, 2-acryloyloxyphthalic acid, dicyclopentenyl acrylate, triethylenglycol diacrylate, neopentylglycol diacrylate, 1,6-hexanediol diacrylate, EO added diacrylate of bisphenol A, trymethylolpropane triacrylate, EO denatured trimethylolpropane triacrylate, pentaerythritol triacrylate, pentaerythritol tetraacrylate, ditrimethylolpropane tetraacrylate, dipentaerythritol hexaacrylate or the like, can be mentioned. These compounds can be used alone or in combination. It should be noted that methacrylates can also be used; however, acrylates are more desirable than methacrylates since the photopolymerization ratios of acrylates are faster.

As a cationic polymerizing photocurable compound, a compound having at least one epoxy group, vinyl ether group or oxetane group in molecules thereof can be used. As a compound having an epoxy group, 2-ethylhexyldiglycolglycidyl ether, glycidyl ether of biphenyl, diglycidyl ethers of bisphenols such as bisphenol A, hydrogenerated bisphenol A, bisphenol F, bisphenol AD, bisphenol S, tetramethyl bisphenol A, tetramethyl bisphenol F, tetrachloro bisphenol A, tetrabromo bisphenol A or the like, polyglycidyl ethers of novolac resins such as phenol novolac, cresol novolac, phenol novolac bromide, ortho-cresol novolac or the like, diglycidyl ethers of alkylene glycols such as ethylene glycol, polyethylene glycol, polypropylene glycol, butanediol, 1,6-hexanediol, neopentyl glycol, trimethylol propane, 1,4-cyclohexane dimethanol, EO added bisphenol A, PO added bisphenol A or the like, and glycidyl esters such as glycidyl ester of hexahydrophthalic acid, diglycidyl ester of dimer acid or the like, can be mentioned.

Furthermore, alicyclic epoxy compounds such as 3,4-epoxycyclohexylmethyl-3',4'-epoxycyclohexane carboxylate, 2-(3,4-epoxycyclohexyl-5,5-spiro-3,4-epoxy)cyclohexane-meta-dioxane, di(3,4-epoxycyclohexylmethyl)adipate, di(3,4-epoxy-6-methylcyclohexylmethyl)adipate, 3,4-epoxy-6-methylcyclohexyl-3',4'-epoxy-6'methylcyclohexane carboxylate, methylenebis(3,4-epoxy cyclohexane), dicyclopentadiene diepoxide, di(3,4-epoxycyclohexylmethyl) ether of ethylene glycol, ethylenebis(3,4-epoxycyclohexane carboxylate), lactone denatured 3,4-epoxycyclohexylmethyl-3',4'-epoxycyclohexane carboxylate, tetra(3,4-epoxycyclohexylmethyl)butane tetracarboxylate, di(3,4-epoxycyclohexylmethyl)-4,5-epoxytetrahydro, phthalate or the like can be mentioned; however, they are not limited to these compounds.

As the compound having a vinyl ether group, for example, diethylene glycol divinyl ether, triethylene glycol divinyl ether, butanediol divinyl ether, hexanediol divinyl ether, cyclohexane dimethanol divinyl ether, hydroxybutylvinyl ether, ethylvinyl ether, dodecylvinyl ether, trimethylol propane trivinyl ether, propenyl ether propylene carbonate or the like can be mentioned, but they are not limited to these compounds. It should be noted that the vinyl ether compound has generally cationic polymerizing characteristics; however, radical polymerizing can be performed by combining with acrylates:

As the compound having an oxetane group, for example, 1,4-bis[(3-ethyl-3-oxetanylmethoxy)methyl]benzene, 3-ethyl-3-(hydroxymethyl)-oxetane, or the like can be used.

The above-described cationic polymerizing compounds can be used alone or in combination.

In order to cure the photocurable compounds as described above, a photoinitiator having photoactivity is required. As a photoinitiator that can polymerize the radical polymerizing compound, benzophenone, benzyl, Michler's ketone, 2-chlorothio xanthone, 2,4-diethylthio xanthone, benzoin ethyl ether, benzoin iso-propyl ether, benzoin iso-butyl ether, 2,2-diethoxy acetophenone, benzyldimethyl ketal, 2,2-dimethoxy-1,2-diphenyl ethan-1-one, 2-hydroxy-2-methyl-1-phenyl propan-1-one, 1-hydroxycyclohexylphenyl ketone, 2-methyl-1-[4-(methylthio)phenyl]-2-morpholino propanone-1,1-[4-(2-hydroxyethoxy)-phenyl]-2-hydroxy-2-methyl-1-propan-1-one, bis(cyclopentadienyl)-bis(2,6-difluoro-3-(pil-1-il) titanium, 2-benzyl-2-dimethylamino-1-(4-morpholinophenyl)-butanone-1,2,4,6-trimethylb enzoyldiphenyl phosphine oxide or the like can be mentioned. These compounds can be used alone or in combination.

A photoinitiator for cationic polymerizing compounds generates acid by light irradiation, and the generated acid can polymerize the above-mentioned cationic polymerizing compound. Generally, an onium salt or metallocene complex is desirably used. As the onium salt, diazonium salt, sulfonium salt, iodonium salt, phosphonium salt, selenium salt or the like is used, and as a counter ion, an anion such as $BF_4^-$, $PF_6^-$, $AsF_6^-$, $SbF_6^-$ or the like can be used. Specifically, 4-chlorobenzendiazonium hexafluorophosphate, triphenylsulfonium hexafluoroantimonate, triphenylsulfonium hexafluorophosphate, (4-phenylthiophenyl) diphenylsulfonium hexafluoroantimonate, (4-phenylthiophenyl) diphenylsulfonium hexafluorophosphate, bis[4-(diphenylsulfonio)phenyl] sulfide-bis-hexafluoroantimonate, bis[4-(diphenylsulfonio)phenyl] sulfide-bis-hexafluorophosphate, (4-methoxyphenyl)diphenylsulfonium hexafluoroantimonate, (4-methoxyphenyl)phenyliodonium hexafluoroantimonate, bis(4-t-butylphenyl)iodonium hexafluorophosphate, benzyltriphenylphosphonium hexafluoroantimonate, triphenylselenium hexafluorophosphate, ($\eta$5-isopropylbenzene)($\eta$5-cyclopentadienyl)iron(II) hexafluorophosphate or the like can be mentioned, but they are not limited to these compounds. These compounds can be used alone or in combination.

In the present invention, the above-mentioned photoinitiator is added at about 0.01 to 10 parts by weight, desirably about 0.1 to 7 parts by weight, and more desirably about 0.1 to 5 parts by weight to 100 parts by weight of the photopolymerizing compound. If the added amount is less than 0.01 parts by weight, the photocurable characteristics are decreased, and if the added amount is more than 10 parts by weight, only the surface is cured and the inside remains with a low level of curing characteristics. These photoinitiators are used by directly dissolving the powder of the photoinitiator into the photopolymerizing compound. In the case in which solubility is low, the photoinitiator is dissolved beforehand into an extremely small amount of solvent to make a solution of high concentration, and the solution can be used. As the solvent, a solvent having photopolymerizing characteristics is more desirable, specifically, propylene carbonate, $\gamma$-butyrolactone or the like can be mentioned. In addition, to improve photopolymerizing characteristics, conventional dyes or sensitizing agents can be added. Furthermore, a thermocurable initiator that can harden the photopolymerizing compound by heating can be used with the photoinitiator. In this case, by heating after photopolymerizing, polymerizing and curing of the photopolymerizing compound can be promoted completely.

In the present invention, the anisotropic diffusing layer can be formed by curing a mixture of the above-mentioned fluorine-containing photocurable compound and the fluorine-free photocurable compound. In addition, in the anisotropic diffusing layer of the present invention, another photocurable compound and a polymer resin not having photocurable characteristics can also be added. As a resin which can be used, acrylic resin, styrene resin, styrene-acrylic copolymer, polyurethane resin, polyester resin, epoxy resin, cellulose type resin, vinyl acetate type resin, vinyl chloride-vinyl acetate copolymer, polyvinyl butyral resin or the like can be mentioned. These polymer resins and photocurable compounds are required to have sufficient compatibility, and various kinds of organic solvents, plasticizing agents or the like can be used to obtain the compatibility. It should be noted that in the case in which acrylate is used as a photocurable compound, acrylic resin is desirable as the polymer resin from the viewpoint of compatibility.

A production method for the anisotropic diffusing medium of the present invention is not limited except for curing of photocurable compounds by irradiating ultraviolet light. For example, the anisotropic diffusing media is produced by forming the composition containing the above-mentioned photocurable compound into a sheet shape and by irradiating collimated light from the direction of line P to this sheet to cure the composition.

In order to promote curing of the composition containing the photocurable compound or to control the degree of the anisotropic diffusion, during irradiating light, the anisotropic diffusing medium may be covered with a transparent flexible sheet in which light penetrates at least one surface of the composition formed in a sheet shape. Furthermore, for the same purpose, the composition formed in a sheet shape may be heated before or after irradiating the light.

As a method to form the composition containing the photocurable compound on a substrate, a conventional coating method or printing method can be performed. Practically, a coating method such as air doctor coating, bar coating, blade coating, knife coating, reverse coating, transfer roll coating, gravure roll coating, kiss coating, cast coating, spray coating, slot orifice coating, calender coating, dam coating, dip coating, dye coating or the like, intaglio printing such as gravure printing or the like, and stencil printing such as screen printing can be used. In the case in which the composition has low viscosity, a dam having a certain height is arranged around the substrate, and the composition can be cast into the area surrounded by the dam.

As a light source to perform irradiation on the sheet of the composition containing a photocurable compound, an ultraviolet light generating light source of short arc is usually used, and practically, a high pressure mercury lamp, low pressure mercury lamp, metal halide lamp, xenon lamp or the like can be used.

A shape of the fine structure formed by irradiating light is different depending on a shape of an emission surface, and in the case of a light source having an emission surface in a bar shape, a fine structure in a plate shape is formed, and in contrast, in the case in which collimated light is used for exposure of a resist, a fine structure in a pillar shape is formed. The latter is preferable from the point view of application of the present invention. In addition, in the case in which the anisotropic diffusing medium having a small size and having a fine structure in a pillar shape is produced, it is possible to perform irradiation from a substantial distance using an ultraviolet light spot light source.

The light source, which irradiates onto a sheet-shaped composition containing a photocurable compound, is required to have a wavelength which can harden the photocurable compound. Usually, a light having a primary wavelength of 365 nm from a mercury lamp is used. To produce the anisotropic diffusing layer of the present invention using the wavelength range illumination intensity is desirably in a range from 0.01 to 100 mW/cm$^2$, and more desirably in a range from 0.1 to 20 mW/cm$^2$. If the illumination intensity is less than 0.01 mW/cm$^2$ , it would take a long time to harden, and production efficiency would decrease, whereas on the other hand, if the illumination intensity is more than 100 mW/cm$^2$, curing of the photocurable compound is too rapid and the structure of the present invention cannot be obtained, and the target anisotropic diffusing characteristics cannot be exhibited.

EXAMPLES

Example 1

A division wall having a height of 0.2 mm was formed around an edge of a PET film (trade name: A4300, produced by Toyobo Co., Ltd.) having a thickness of 75 μm, a length of 76 mm, and a width of 26 mm with curable resin using a dispenser. The following composition of ultraviolet light curable resin was dropped in the area surrounded by the wall, and this was covered by another PET film.

· 2-(perfluorooctyl)-ethylacrylate (trade name: Light acrylate FA-108, fluorine content: 61 %, produced by Kyoei Kagaku Kogyo) 50 parts by weight
· 1,9-nonane diol diacrylate (trade name: Light acrylate 1.9ND-A, fluorine-free, produced by Kyoei Kagaku Kogyo) 50 parts by weight
· 2-hydroxy-2-methyl-1-phenylpropan-1-one (trade name: Darocure1173, produced by Ciba Specialty Chemicals) 4 parts by weight

Ultraviolet light having an irradiation intensity of 30 mW/cm$^2$ was irradiated from a direct beam uniform illumination unit with a UV spot light source (trade name: L2859-01, produced by Hamamatsu Photonics) vertically to the liquid membrane having a thickness of 0.2 mm placed between the PET. films for 1 minute. An anisotropic diffusing medium of Example 1 of the present invention having large number of fine pillar-shaped areas shown in Fig. 1 was obtained.

Example 2

A division wall having a height of 0.2 mm was formed around an edge of a slide glass having a length of 76 mm and a width of 26 mm with curable resin using a dispenser. The following composition of ultraviolet light curable resin was dropped in the area surrounded by the wall, and this was covered by another slide glass.

· 2-(perfluorooctyl)-ethylacrylate (trade name: Light acrylate FA-108, fluorine content: 61 %, produced by Kyoei Kagaku Kogyo) 50 parts by weight
· 1,9-nonane diol diacrylate (trade name: Light acrylate 1.9ND-A, fluorine-free, produced by Kyoei Kagaku Kogyo) 50 parts by weight
· 2-hydroxy-2-methyl-1-phenylpropan-1-one (trade name: Darocure1173, produced by Ciba Specialty Chemicals) 4 parts by weight

Ultraviolet light having an irradiation intensity of 30 mW/cm$^2$ was irradiated from a direct beam uniform illumination unit with a UV spot light source (trade name: L2859-01, produced by Hamamatsu Photonics) vertically to the liquid membrane having a thickness of 0.2 mm placed between the slide glasses for 1 minute. An anisotropic diffusing medium of Example 2 of the present invention having large number of fine pillar-shaped areas shown in Fig. 1 was obtained.

Example 3

Ultraviolet light having an irradiation intensity similar to that of the Example 1 was irradiated vertically to the composition of ultraviolet curing similar to that of the Example 1 placed between the PET films by a linear UV source (trade name: Handy UV device HUV-1000, produced by Japan UV Machine) which was placed in an orthogonal direction to a long edge of the PET film and had a light emission length of 125 mm. An anisotropic diffusing medium of Example 3 of the present invention with plate-shaped areas having different refractive indexes shown in Fig. 3 was obtained.

Example 4

A division wall having a height of 0.2 mm was formed around an edge of a slide glass having a length of 76 mm and a width of 26 mm with curable resin using a dispenser. The following composition of ultraviolet light curable resin was dropped in the area surrounded by the wall, and this was covered by another slide glass.

· 2,2,2-trifluoroethyl methacrylate (trade name: Light ester M-3F, fluorine content: 33%, produced by Kyoei Kagaku Kogyo) 50 parts by weight
· 1,9-nonane diol diacrylate (trade name: Light acrylate 1.9ND-A, fluorine-free, produced by Kyoei Kagaku Kogyo) 50 parts by weight
· 2-hydroxy-2-methyl-1-phenylpropan-1-one (trade name: Darocure1173, produced by Ciba Specialty Chemicals) 4 parts by weight

Ultraviolet light having an irradiation intensity of 30 mW/cm$^2$ was irradiated from a direct beam uniform illumination unit with a UV spot light source (trade name: L2859-01, produced by Hamamatsu Photonics) vertically to the liquid membrane having a thickness of 0.2 mm placed between the slide glasses for 1 minute. An anisotropic diffusing medium of Example 4 of the present invention having a large number of fine pillar-shaped areas shown in Fig. 1 was obtained.

Comparative Example

A division wall having a height of 0.2 mm was formed around an edge of a slide glass having a length of 76 mm and a width of 26 mm with curable resin using a dispenser. The following composition of ultraviolet light curable resin was dropped in the area surrounded by the wall, and this was covered by another slide glass.

· 3-methyl-n-butylacrylate (trade name: Light acrylate IAA, fluorine-free, produced by Kyoei Kagaku Kogyo) 50 parts by weight
· 1,9-nonane diol diacrylate (trade name: Light acrylate 1.9ND-A, fluorine-free, produced by Kyoei Kagaku Kogyo) 50 parts by weight
· 2-hydroxy-2-methyl-1-phenylpropan-1-one (trade name: Darocure1173, produced by Ciba Specialty Chemicals) 4 parts by weight

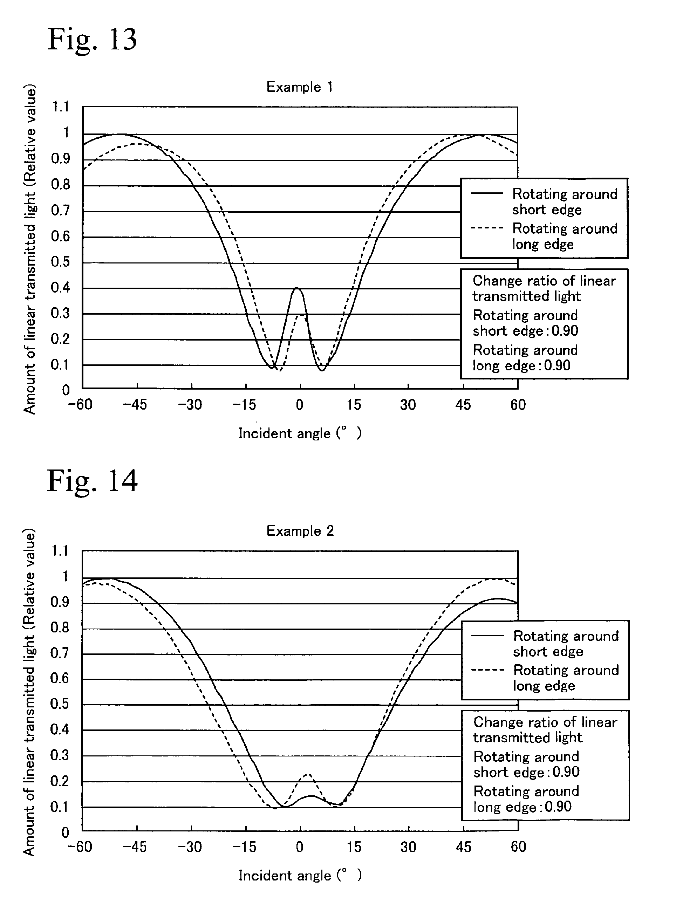

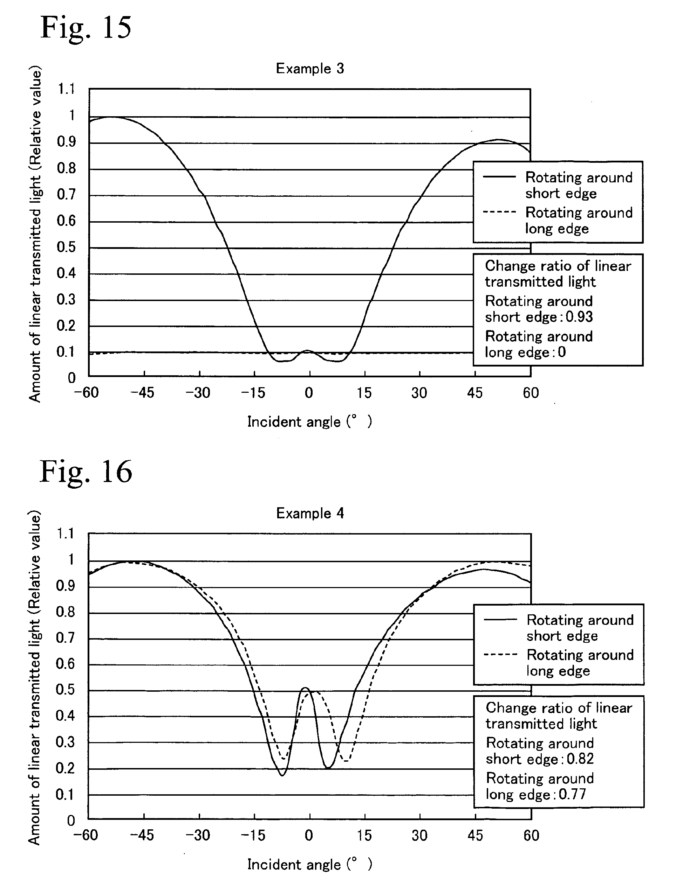

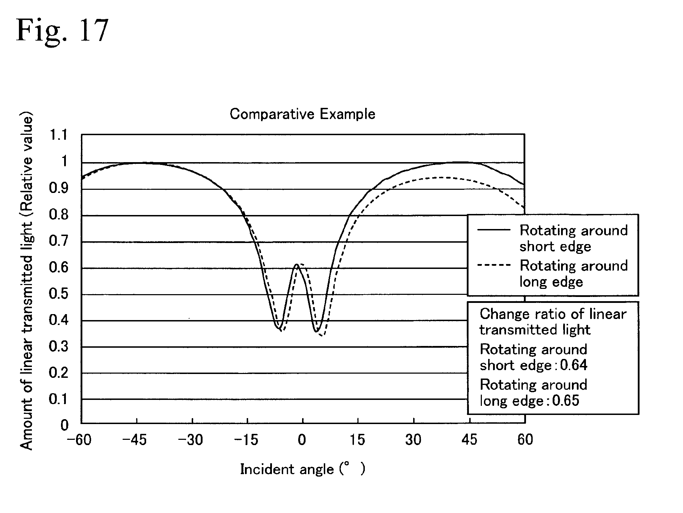

Ultraviolet light having an irradiation intensity of 30 mW/cm$^2$ was irradiated from a direct beam uniform illumination unit with a UV spot light source (trade name: L2859-01, produced by Hamamatsu Photonics) vertically to the liquid membrane having a thickness of 0.2 mm placed between the slide glasses for 1 minute. An anisotropic diffusing medium of the Comparative Example having a large number of fine pillar-shaped areas shown in Fig. 1 was obtained.
Using a goniophotometer (trade name: GP-5, produced by Murakami Color Research Laboratory), a light receiving part was fixed at a position to receive straight traveling light from a light source, and the anisotropic diffusing media of Examples 1 to 4 and the Comparative Example were set in a sample holder between the light source and the light receiving part. As shown in Fig. 11, the short edge of the sample used during production of the anisotropic diffusing medium was defined as a rotation axis (L), the sample was rotated and the amount of linear transmitted light corresponding to each incident angle was measured, and this test was called "rotating around the short edge". Next, the sample was removed from the sample holder, the sample was rotated 90 degrees at the surface and the sample was again set to the holder. This time, the amount of linear transmitted light when rotating around the long edge of the slide glass, that is, a rotating axis (M), was measured, and this test was called "rotating around the long edge".
Regarding the anisotropic diffusing media of Examples 1 to 4 and the Comparative Example, the relationship of the incident angle and the amount of the linear transmitted light measured concerning the two rotation axes, is shown in Figs. 13 to 16 and 17. In Examples 1, 2 and 4, a deep valley having a small peak at an incident angle of 0 degrees and having change ratio of the amount of the linear transmitted light of 0.8 to 0.9 was exhibited in both of the rotating around the short edge and the rotating around the long edge, and the graph is almost bilaterally symmetric. In addition, in Example 3, selective anisotropic diffusion is exhibited, in which in the rotating around the short edge, a similar deep valley as in the other Examples was exhibited, and in the rotating around the long edge, the amount of linear transmitted light was little changed even if the incident angle was varied.
In contrast, in the anisotropic diffusing medium of the Comparative Example; a shallow valley having a change ratio of the amount of the linear transmitted light of 0.64 to 0.65 was exhibited, and it was clear that the anisotropic diffusion characteristics were insufficient in comparison with that of the Examples.
As explained above, according to the present invention, an anisotropic diffusing medium in which an amount of transmitted light varies greatly depending on incident angle can be provided.

**Claims**

1. An anisotropic diffusing medium comprising:

a resin layer of a cured material of a composition including at least a fluorine-containing photocurable compound and a fluorine-free photocurable compound,

wherein an amount of linear transmitted light when light is transmitted to the resin layer differs depending on an incident angle of an incident light on the resin layer.

2. An anisotropic diffusing medium according to claim 1, wherein a ratio of fluorine atoms in the fluorine-containing photocurable compound is at least 40% by mass.

3. An anisotropic diffusing medium according to claim 1 or 2,
   wherein an aggregation of plural pillar-shaped cured areas is formed inside the resin layer,
   wherein the plural pillar-shaped cured areas extend parallel to a specific direction P, and
   wherein in the case in which amounts of each linear transmitted light corresponding to each incident light from all directions to an arbitrary input point on one side of the anisotropic diffusing medium are displayed by vectors beginning at an output point on the other side of the anisotropic diffusing medium corresponding to the input point to each direction of output, the rounded surface obtained by connecting the top of the vectors is a bell-shaped rounded surface having a symmetric axis of direction P.

4. An anisotropic diffusing medium according to any one of claims 1 to 3,
   wherein the specific direction P is a normal line S to the surface of the anisotropic diffusing medium.

5. An anisotropic diffusing medium comprising a transparent substrate and the anisotropic diffusing medium according to any one of claims 1 to 4 provided on the transparent substrate.

6. An anisotropic diffusing medium comprising the anisotropic diffusing medium according to any one of claims 1 to 4 and transparent substrates layered on both surfaces of the anisotropic diffusing medium.

## Fig. 1

## Fig. 2A

Cross section of irradiation from point light source

## Fig. 2B

Cross section perpendicular to cross section shown in Fig. 2A

# Fig. 3

# Fig. 4A

Cross section perpendicular to a direction of line light source

# Fig. 4B

Cross section collimated in a direction of line light source

## Fig. 5

## Fig. 6

Range of incident angle

## Fig. 7

## Fig. 8

## Fig. 9

## Fig. 10

# Fig. 11

# Fig. 12

———————  Rotating around Line L

................  Rotating around Line M

## Fig. 13

Example 1

## Fig. 14

Example 2

## Fig. 15

Example 3

## Fig. 16

Example 4

Fig. 17

## INTERNATIONAL SEARCH REPORT

| International application No. |
| --- |
| PCT/JP2005/019038 |

A. CLASSIFICATION OF SUBJECT MATTER
*G02B5/02*(2006.01), *G02B1/04*(2006.01)

According to International Patent Classification (IPC) or to both national classification and IPC

B. FIELDS SEARCHED

Minimum documentation searched (classification system followed by classification symbols)
*G02B5/02*(2006.01), *G02B1/04*(2006.01)

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | EP 0762154 A2 (SUMITOMO CHEMICAL CO.),<br>03 December, 1997 (03.12.97),<br>Full text; all drawings<br>& JP 9-127331 A | 1,3-6<br>2 |
| X<br>Y<br>A | JP 2001-228312 A (Toppan Printing Co., Ltd.),<br>24 August, 2001 (24.08.01),<br>Full text; all drawings<br>(Family: none) | 1,3,5<br>4,6<br>2 |
| X<br>Y<br>A | JP 2001-221907 A (Toppan Printing Co., Ltd.),<br>17 August, 2001 (17.08.01),<br>Full text; all drawings<br>(Family: none) | 1,3,4<br>5,6<br>2 |

☒ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 January, 2006 (19.01.06) | 31 January, 2006 (31.01.06) |

| Name and mailing address of the ISA/<br>Japanese Patent Office | Authorized officer |
| --- | --- |
| Facsimile No. | Telephone No. |

Form PCT/ISA/210 (second sheet) (April 2005)

**INTERNATIONAL SEARCH REPORT**

International application No.

PCT/JP2005/019038

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | WO 03/025632 A1  (CLARIANT INTERNATIONAL LTD.),<br>27 March, 2003 (27.03.03),<br>Full text; all drawings<br>& JP 2003-90905 A | 1,3-6<br>2 |
| Y<br>A | JP 2004-54132 A  (Daicel Chemical Industries,<br>Ltd.),<br>19 February, 2004 (19.02.04),<br>Full text; all drawings<br>(Family: none) | 1,3-6<br>2 |
| A | JP 2003-315508 A  (Nitto Denko Corp.),<br>06 November, 2003 (06.11.03),<br>Full text; all drawings<br>(Family: none) | 1-6 |
| A | JP 2004-87234 A  (Daicel Chemical Industries,<br>Ltd.),<br>18 March, 2004 (18.03.04),<br>Full text; all drawings<br>(Family: none) | 1-6 |
| A | EP 0949515 A2  (Toppan Printing Co., Ltd.),<br>13 October, 1999 (13.10.99),<br>Full text; all drawings<br>& JP 2000-171619 A | 1-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1077001 A
- JP 1147405 A
- JP 1147406 A
- JP 2054201 A
- JP 3109501 A
- JP 6009714 A
- JP 50092751 A
- JP 3043069 B